# EUROPEAN PATENT APPLICATION

(11) **EP 2 264 999 A1**
(43) Date of publication of application: **22.12.2010**
(21) Application number: 10006143.1
(22) Date of filing: 14.06.2010
(51) Int. Cl.: H04N 5/00, G06F 17/30

(54) **Contents managing method and apparatus**

(30) Priority: 15.06.2009 KR 20090052652
(71) Applicant: Humax Co., Ltd., Seongnam-si, Gyeonggi-do 463-825 (KR)
(72) Inventor: Junhyung, Kim, Bundang-gu Seongnam-si Gyeonggi-do 463-717 (KR)
(74) Representative: TER MEER - STEINMEISTER & PARTNER GbR

(57) **Abstract**

A method of managing contents is provided. Contents are searched from one or more indexing files that manage contents stored in one or more devices and displayed in the form of a list. The contents may be displayed along with devices storing the contents. If the contents are stored in an external device, a connecting state of the external device may be displayed. When contents requested to be reproduced by a user is stored in an unconnected external device, a message that requests the user to connect the unconnected external device may be displayed. When an external device is connected, the indexing file of the external device is searched and the searched indexing file is synchronized with indexing file managed in the device. Accordingly, the user can easily detect the device storing contents that the user desires and selectively reproduce the contents with efficiency.

## Description

This nonprovisional application claims priority on Patent Application No. 10-2009-0052652 filed in Republic of Korea on June 15, 2009 the entire contents of which are hereby incorporated by reference.

### BACKGROUND

### Field

This document relates to a method of managing contents stored in a connected external device.

### Related Art

Set-top-boxes (STBs) receiving various types of digital broadcasting such as terrestrial digital broadcasting, satellite digital broadcasting and cable digital broadcasting have been widely propagated and used. Furthermore, IP set-top-boxes (IP STBs) capable of using IP broadcasting services such as video on demand (VOD) service that provides programs of various contents through the Internet have been commercialized in recent years.

These STBs or IP STBs include a storage device, for example, a large-capacity hard disk, and provides a personal video recording (PVR) function that records various contents received through digital broadcasting service or VOD service. Accordingly, a user can record desired contents in the hard disk and selectively reproduce the contents at desired time.

Moreover, a broadcasting receiver such as STB or IP STB having the PVR function can be connected to various external devices such as a hard disk and a flash memory through an interface, for example, universal serial bus (USB) interface, and selectively reproduce contents stored in the external devices, and thus a user can selectively view contents stored in the external devices as well as contents stored in a hard disk included in the broadcasting receiver at desired time.

Since the number and types of external devices that can be connected to the broadcasting receiver have abruptly increased in recent years, it is difficult to detect an external device that stores desired contents. Accordingly, it is required to connect all related external devices to the broadcasting receiver to search the desired contents.

### SUMMARY

An aspect of this document is to provide a method of efficiently managing contents stored in an external device.

In an aspect, a method of managing contents may comprises searching contents from one or more indexing files that manage contents stored in one or more devices; and displaying the searched contents with devices storing the contents in the form of a list.

In another aspect, an apparatus of managing contents may comprise an interface configured to connect an external device to the apparatus; a storage unit configured to store contents and one or more indexing files that manage contents stored in one or more devices; and a controller configured to search contents from the indexing files and display the searched contents with devices storing the contents in the form of a list.

If the contents are stored in an external device, a connecting state of the external device may be displayed.

When contents requested to be reproduced by a user is stored in an internal device or a connected external device, the requested contents may be reproduced using the indexing files. When the requested contents is stored in an unconnected external device, a message requesting the user to connect the unconnected external device may be output.

Each of the indexing files may include information on a device and contents stored in the device. The indexing files may be respectively matched to the corresponding devices and stored in a single folder. The information on the device may include at least one of the device name, device ID, first user ID, first synchronization time, last user ID, last synchronization time and contents information stored in the device. The information on the contents may include at least one of the title, full name, contents type and extra information of the contents, the full name may represent the access route and file name of the contents, and the extra information may include at least one of a thumbnail image, the total reproduction time and the recording time of the contents.

When an external device is connected, an indexing file of the external device may be searched and the searched indexing file may be synchronized with an indexing file managed in an internal device or a server. If the indexing file of the external device does not correspond to the indexing file managed in the internal device or the server, the indexing file managed in the internal device or the server may be updated on the basis of the indexing file of the external device. When the indexing file of the external device is not searched, the indexing file for the external device may be generated and stored in the external device and the internal device or the server.

Accordingly, a device storing contents that a user wants can be easily detected and the desired contents can be selectively reproduced with efficiency.

### BRIEF DESCRIPTION OF THE DRAWINGS

The implementation of this document will be described in detail with reference to the following drawings in which like numerals refer to like elements.

FIG. 1 illustrates an implementation of a connecting state of an IP STB;

FIG. 2 illustrates an internal configuration of the IP STB shown in FIG. 1;

FIG. 3 illustrates an implementation of storing indexing files in a specific folder;

FIG. 4 illustrates an implementation of an indexing file;

FIG. 5 is a flowchart showing an implementation of an indexing file managing method;

FIG. 6 is a flowchart showing an implementation of a contents managing method;

FIG. 7 illustrates an implementation of a displayed contents list; and

FIG. 8 illustrates another implementation of a displayed contents list.

### DETAILED DESCRIPTION

Hereinafter, an implementation of this document will be described in detail with reference to the attached drawings.

A method of managing contents in this document may be applied to various types of broadcasting receivers such as an STB receiving digital broadcasting or an IP STB receiving digital broadcasting and IP broadcasting.

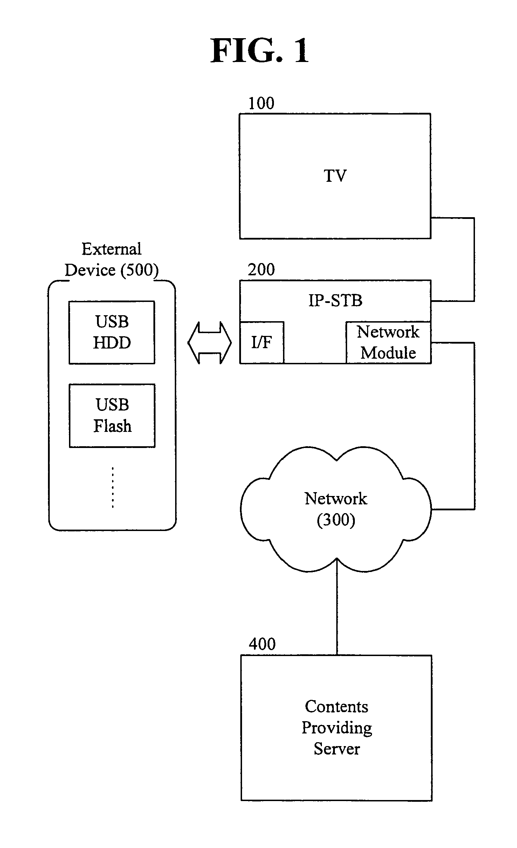

Referring to FIG. 1, an IP STB 200 is connected to a television receiver 100 and may include a network module that receives various contents provided by a contents providing server 400 through a network 300 such as the Internet and a USB interface for connecting the IP STB 200 to various external devices 500 such as a USB hard disk and USB flash memory. The IP STB 200 may include a large-capacity hard disk.

The IP STB 200 may perform a PVR function that records received digital broadcasting programs in the hard disk or the USB flash memory connected to the IP STB 200 or records various contents received from the contents providing service 400 in the hard disk or the flash memory at the request of a user.

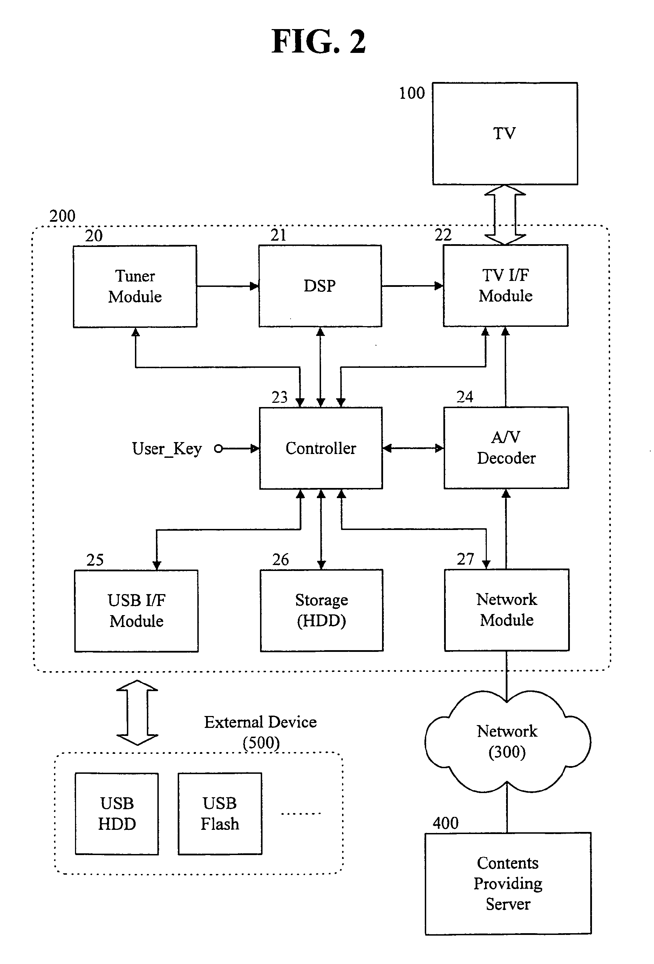

FIG. 2 illustrates an internal configuration of the IP STB 200 shown in FIG. 1. The IP STB 200 may include a tuner module 20, a digital signal processor (DSP) 21, a TV interface module 22, a controller 23, an A/V decoder 24, a USB interface module 25, a storage unit 26, and a network module 27. The storage unit 26 may use a large-capacity hard disk and the digital signal processor 21 and the A/V decoder 24 may be integrated into a single module.

The controller 23 controls the digital signal processor 21 to process a digital broadcasting program received through the tuner module 20 or various contents provided by the contents providing server 400 through the network module 27 and output the processed result as audio and video signals or store the digital broadcasting program or the contents in the storage unit 26 as data files. Furthermore, the controller 23 may store the digital broadcasting program or the contents in the external device 500 such as a USB hard disk and a USB flash memory connected through the USB interface module 25.

The controller 23 generates indexing information on the data files corresponding to the digital broadcasting program or the contents, stored in the storage unit 26, and manages the indexing information as indexing files in the storage unit 26.

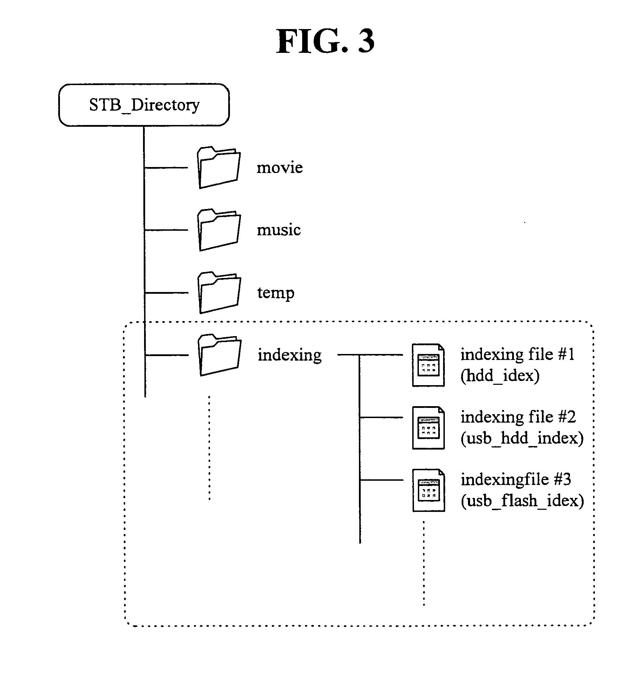

Moreover, the controller 23 performs synchronization with the external devices 500 connected through the USB interface module 25 to search device information on the external devices 500 and information on contents stored in the external devices, generates indexing files corresponding to the respective external devices 500 and stores the indexing files in the storage unit 26. Referring to FIG. 3, indexing files #1, #2 and #3 may be stored in a single specific folder, for example, an indexing folder, and managed.

Each indexing file may include device information such as a device name deviceName, a device ID deviceID, a first user ID firstUserID, a first synchronization time firstSyncTime, a last user ID lastUserID, a last synchronization time lastSyncTime, and contents information contentInfo.

Furthermore, the indexing file may include contents information on contents stored in the external device corresponding to the indexing file, such as a title Title, a full name fullName, a contents type contentType and extra information extraInfo of the contents. Here, the title included in the contents information represents the name (for example, a film title) of the corresponding contents, the full name represents the access route and file name of the contents, the contents type represents the video file format or music file format of the contents, and the extra information represents a thumbnail image, the total reproduction time and the recording time of the contents. The extra information is generally recorded on the basis of a browser of STB, and thus additional information may be included in the extra information according to the type and quantity of information provided by the browser.

The device name included in the device information is the unique device name given to each external device. The controller 23 may automatically generate a unique device name with reference to other indexing files stored in the specific folder or temporarily generate a virtual device name and correct the virtual device name into a device name at the request of a user.

The device ID is automatically generated by the controller 23 and used to identify each external device, the first user ID is used to identify the first user who backs up the corresponding contents, and the first synchronization time represents the first time when synchronization with the corresponding external device is performed to generate the indexing file. The last user ID is used to identify the last user who backs up the contents, the last synchronization time represents the last time when synchronization with the corresponding external device is performed, and the contents information corresponds to link information on contents included in the corresponding external device.

The controller 23 performs synchronization with the external devices to update the indexing files stored in the storage unit 26 or generate new indexing files and additionally manage the new indexing files.

Furthermore, the controller 23 displays a contents list using the indexing files stored in the storage unit 26. When a user selects arbitrary contents from the displayed contents list, the controller 23 confirms a device that stores the selected contents and reproduces the selected contents, which will be explained in detail.

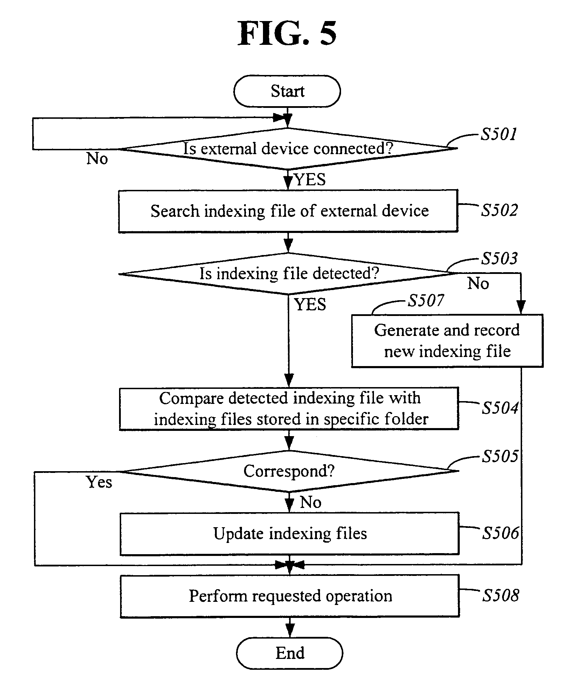

FIG. 5 is a flowchart showing an implementation of an indexing file managing method.

Referring to FIGS. 2 and 5, the controller 23 stores indexing files in the storage unit 26 in a specific folder and manages the stored indexing files, as described above with reference to FIG. 3.

When an external device is connected to the IP STB 200 through the USB interface module 25 in operation S501, the controller 23 searches an indexing file stored in the external device in operation S502.

When the indexing file is detected from the external device in operation S503, the controller 23 compares the detected indexing file with the indexing files stored in the specific folder in the storage unit 26 and confirms whether there is an indexing file corresponding to the detected indexing file among the indexing files stored in the specific folder in operation S504.

The controller 23 detects a device name, a device ID, a first user ID, a first synchronization time, a last user ID, a last synchronization time and contents information, which are recorded as device information in the indexing file of the external device, and compares the detected device information with device information recorded in the indexing files stored in the specific folder in the storage unit 26.

When the detected device information does not correspond to the device information recorded in the indexing files stored in the specific folder in operation S505, for example, if the last user ID and the last synchronization time recorded in the indexing file of the external device do not correspond to those recorded in the indexing files stored in the specific folder although the device name, the device ID, the first user IC, the first synchronization time and the contents information recorded in the indexing file of the external device correspond to those recorded in the indexing files stored in the specific folder, the controller 23 updates the indexing files stored in the specific folder of the storage unit 26 on the basis of the indexing file of the external device in operation S506. When the detected device information corresponds to the device information recorded in the indexing files stored in the specific folder of the storage unit 26 in operation S505, the operation of updating the indexing files is omitted.

When the indexing file is not detected from the external device in operation S503, the controller 23 determines that the connected external device is a new external device, generates a new indexing file, records the new indexing file in the external device and stores the indexing file in the specific folder in the storage unit 26 in operation S507.

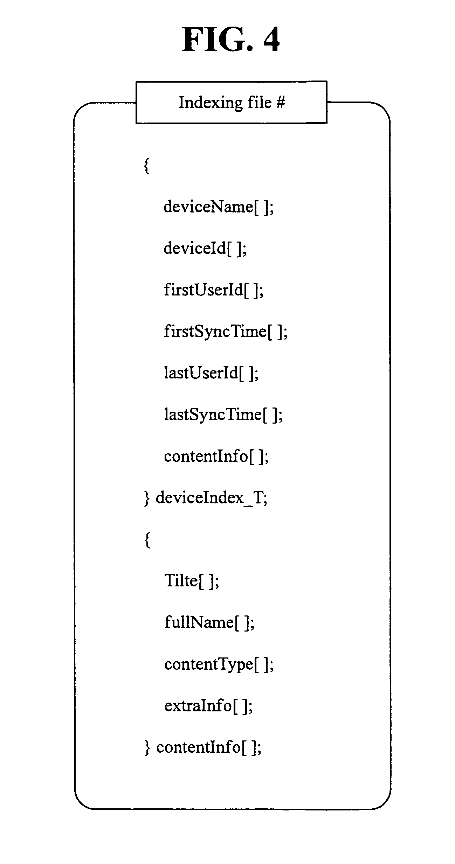

The controller 23 automatically generates a device name deviceName[] for identifying the external device or generates a virtual device name and then allows a user to change the virtual device name, as described above with reference to FIG. 4.

The controller 23 automatically generates device ID deviceId[] for identifying the external device and generates a first user ID firstUserId[] for identifying the first user who backs up contents for the first time.

Furthermore, the controller 23 performs synchronization with the external device to generate a first synchronization time firstSyncTime[] that represents the time when the indexing file is generated, generates contents information contentInfo[] for associating contents included in the external device and records the contents information in the device information of the indexing file.

In addition, the controller 23 generates a title, a full name, a media type and extra information as information on individual contents stored in the external device and records the generated information in the contents information of the indexing file. For example, the title represents the name of the corresponding contents (for example, a film title), the full name represents the access route and file name of the contents (for example, USB-HDD01/ABC0.1mpg), the contents type represents the format of the contents, and the extra information represents a thumbnail image, the total reproduction time and the recording time of the contents, as described above with reference to FIG. 4.

The controller 23 performs an operation that the user desires by using the newly added or updated indexing information file in operation S508.

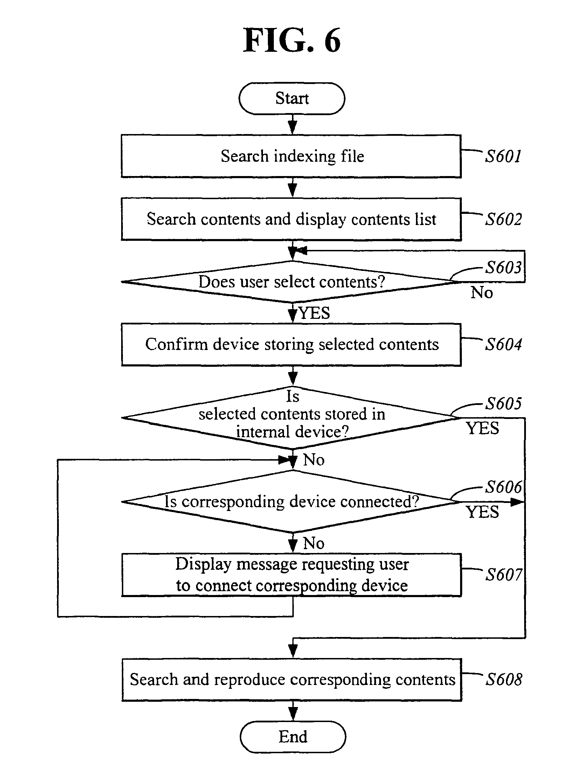

FIG. 6 is a flowchart showing an implementation of a contents managing method.

Referring to FIGS. 2 and 6, when a contents information display mode is set at the request of a user, the controller 23 searches indexing files stored and managed in a specific folder in the storage unit 26 in operation S601.

The controller 23 searches the titles of contents recorded in the indexing files and displays the searched titles as a contents list in operation S602.

For example, the digital signal processor 21 may include an OSD generator (not shown) and the controller 23 may control the OSD generator to display the searched titles as the contents list.

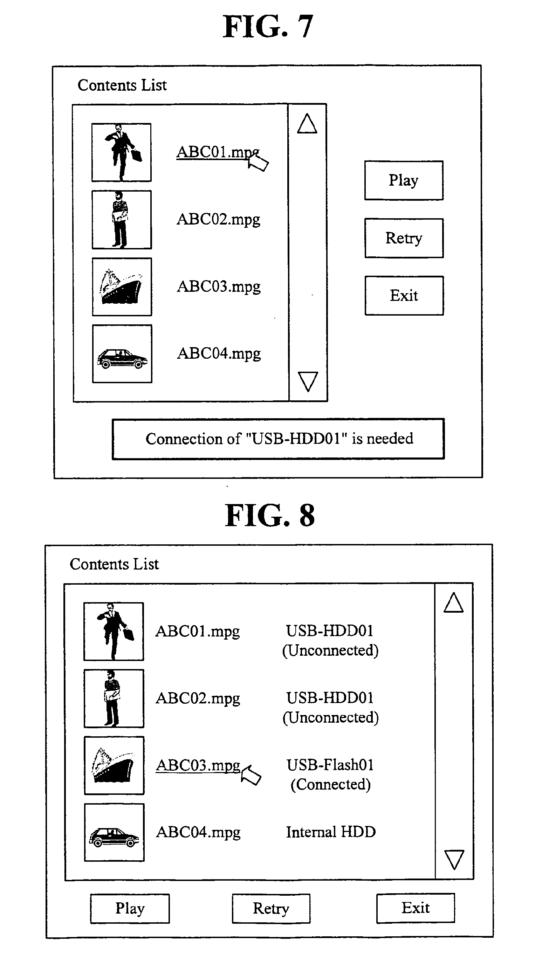

Referring to FIG. 7, the contents list may display thumbnail images from extra information recorded as contents information together with titles of contents.

When the user selects a title from the contents list in operation S603, the controller 23 confirms the device that stores the contents corresponding to the selected title in operation S604. If the selected contents is stored in an internal device, that is, the storage unit 26, in operation S605, the controller 23 reads the corresponding contents and reproduces the read contents in operation S608.

If the contents corresponding to the selected title is not stored in the internal device in operation S605, the controller 23 confirms whether the external device storing the contents is connected to the USB interface module 25 in operation S606. When the external device is not connected to the USB interface module 25, the controller 23 controls the operation of the OSD generator to display a message that requests the user to connect the external device to the USB interface module 25 in operation S607.

The OSD generator outputs the message that requests the user to connect the external device (for example, USB-HDD01) storing the contents (for example, ABC01.mpg corresponding to the title selected by the user to the USB interface module 25, as shown in FIG. 7.

If the external device is connected in operation S606, the controller 23 performs a contents retrieving and reproducing operation to read and reproduce the contents stored in the external device in operation S608.

When the controller 23 displays the titles and thumbnail images in the form of a list, the controller 23 may confirm the devices storing the contents corresponding to the titles and display information on the names and connecting states of the devices storing the contents. For example, titles ABC01.mpg and ABC02.mpg are displayed with a message representing that external device USB-HDD01 storing titles ABC01.mp and ABC02.mpg is unconnected, title ABC03.mpg is displayed with a message representing that external device USB-Flash01 storing title ABC03.mpg is connected, and title ABC04.mpg is displayed with the internal storage unit Internal HDD, as shown in FIG. 8.

Accordingly, the user can confirm connecting state of the devices displayed in the contents list in advance and select contents (for example, ABC03.mpg or ABC04.mpg) that can be directly reproduced without requiring an additional connecting operation.

For reference, additional information other than the device information and contents information may be recorded in the indexing files. Furthermore, additional information that the user requires may be recorded in the device information and contents information.

The controller 23 may upload the indexing files managed in the specific folder of the storage unit 26 to the contents providing server 400 connected through the network module 27 and download the indexing files through interface with the contents providing service 400 if required.

Other implementations are within the scope of the following claims.

## Claims

1. A method of managing contents, comprising:
searching contents from one or more indexing files that manage contents stored in one or more devices; and
displaying the searched contents with devices storing the contents in the form of a list.

2. The method of claim 1, wherein the displaying of the searched contents comprises displaying a connecting state of an external device if the contents are stored in the external device.

3. The method of claim 2, further comprising reproducing contents requested to be reproduced by a user using the indexing files when the requested contents is stored in an internal device or in a connected external device.

4. The method of claim 3, further comprising outputting a message that requests the user to connect an unconnected external device when the requested contents is stored in the unconnected external device.

5. The method of claim 2, wherein each of the indexing files includes information on a device and contents stored in the device.

6. The method of claim 5, wherein the indexing files are respectively matched to the corresponding devices and stored in a single folder.

7. The method of claim 5, wherein the information on the device includes at least one of the device name, device ID, first user ID, first synchronization time, last user ID, last synchronization time and contents information stored in the device.

8. The method of claim 5, wherein the information on the contents includes at least one of the title, full name, contents type and extra information of the contents, the full name represents the access route and file name of the contents, and the extra information includes at least one of a thumbnail image, the total reproduction time and the recording time of the contents.

9. The method of claim 1, further comprising:
searching an indexing file of an external device when the external device is connected; and
synchronizing the searched indexing file with an indexing file managed in an internal device or a server.

10. The method of claim 9, wherein the synchronizing of the searched indexing file comprises updating the indexing file managed in the internal device or the server on the basis of the indexing file of the external device if the indexing file of the external device does not correspond to the indexing file managed in the internal device or the server.

11. The method of claim 9, wherein when the indexing file of the external device is not searched, the synchronizing of the searched indexing file comprises generating the indexing file for the external device and storing the generated indexing file in the external device and the internal devices or the server.

12. An apparatus of managing contents, comprising:
an interface configured to connect an external device to the apparatus;
a storage unit configured to store contents and one or more indexing files that manage contents stored in one or more devices; and
a controller configured to search contents from the indexing files and display the searched contents with devices storing the contents in the form of a list.

13. The apparatus of claim 12, wherein the controller is configured to display a connecting state of an external device if the contents are stored in the external device.

14. The apparatus of claim 13, wherein each of the indexing files includes information on a device and contents stored in the device.

15. The apparatus of claim 12, wherein the controller is configured to search an indexing file of an external device when the external device is connected and synchronize the searched indexing file with an indexing file stored in the storage unit.
